# EUROPEAN PATENT SPECIFICATION

(11) **EP 1 791 265 B1**
(45) Date of publication and mention of the grant of the patent: **09.09.2015**
(21) Application number: 06124690.6
(22) Date of filing: 23.11.2006
(51) Int. Cl.: H04B 1/3816, H04M 1/725

(54) **Radio communication device, method for controlling a chip card, radio communication terminal, chip card and method for operating a chip card**
Funkgerät, Verfahren zum Streuern einer Chipkarte, Funkendgerät, Chipkarte und Verfahren zum Betreiben einer Chipkarte
Dispositif de radiocommunication, procédé de commande d'une carte à puce, terminal de radiocommunication, carte à puce et procédé et méthode pour faire fonctionner une carte à puce

(30) Priority: 20.11.2006 US 561597; 23.11.2005 US 739305 P
(43) Date of publication of application: 30.05.2007
(73) Proprietor: Intel Mobile Communications GmbH, 85579 Neubiberg (DE)
(72) Inventor: Luft, Achim, 38118, Braunschweig (DE); Schwagmann, Norbert, 38102, Braunschweig (DE); Van Niekerk, Sabine, 38228, Salzgitter (DE)
(74) Representative: Goddar, Heinz J.

(56) References cited:
- EP-A- 1 322 071
- WO-A-99/60713
- JP-A- 2002 368 759
- JP-A- 2007 106 037

## Description

The invention relates to a radio communication device, a method for controlling a chip card, a radio communication terminal, a chip card and a method for operating a chip card.

WO 99/60713 describes a mobile phone with extension module to provide further communication means with peripheral devices and services. The extension module may comprise a transceiver coil and an infra-red transmitter and receiver. Signals from peripheral devices are received at the extension module and passed into the mobile phone. Signals from peripheral devices may be received by a chip unit in the mobile phone whereby interaction between the user of the mobile phone and the peripheral device may be controlled. The user of the mobile phone may thereby access the peripheral devices using the mobile phone.

EP 1322071 discloses a method by which users of a pool of blue-tooth devices may easily read which devices are available in the pool and easily differentiate between them on a display screen. Within the master-slave blue-tooth protocol devices in blue-tooth communication to each are caused to signal to one device which of them are available for communication. Details of all devices are held within a memory within the device receiving the information and a list of devices available for blue-tooth connection are displayed for the user on display equipment using easy to read names.

JP 2002 368759 discloses a blue-tooth device arrangement to manage interactions between the various devices in a blue-tooth pool. Data queries are communicated to the various equipment and technical details of the items of equipment capable of responding positively to the query are formulated.

In a mobile communication system according to the UMTS (Universal Mobile Telecommunications System)-Standard a mobile radio user device is called UE (user equipment) and consists of a mobile phone (the so-called mobile equipment ME) and a UICC (Universal Integrated Circuit Card). The UICC is a smart card and allows a user when it is plugged into the user's mobile phone to use the mobile communication service that the user has subscribed to.

Parameters defined by the user and/or by the operator of the mobile communication network can be stored on the UICC. Further, operator-specific applications defined by the operator of the mobile communication network may be installed on the UICC. These applications can make use of the USAT (USIM application toolkit) which is an interface between the USIM (UMTS subscriber identity module) which is physically implemented by the UICC and the mobile equipment such that these applications can make use of the functionality of the mobile equipment, e.g. for sending an SMS (Short Message Service) message to the mobile communication network, playing a tone using the loudspeaker of the mobile equipment or displaying text or a graphical icon on the display of the mobile equipment.

With current mobile phones, it is possible to connect external devices such as a headset or other hardware such as a multimedia card (MMC) to a mobile phone. With future mobile phones it will probably be possible to connect other devices to a mobile phone, e.g. external displays, external monitors, loudspeakers, printers, scanners etc. by using connection mechanisms such as Bluetooth, USB (Universal Serial Bus) etc. In case of a user equipment according to UMTS, the mobile equipment has the information which external devices are connected to the mobile equipment, but it is not known to the UICC of the UE and consequently not known by any application running on the UICC which devices are connected to the mobile equipment. When the UICC or an application running on the UICC does not have the information which devices are connected to the mobile equipment, the UICC or the application, respectively, cannot use the devices connected to the mobile equipment for any purpose.

A radio communication device is described as defined in the claims, and comprising a radio communication terminal and a chip card with a memory and a processor is provided which comprises a generation unit configured to generate a device list which specifies which devices are coupled to the radio communication terminal and a transmitting unit configured to transmit the device information to the chip card.

Further, a method for controlling a chip card, a radio communication terminal, a chip card and a method for operating a chip card according to the radio communication device described above are provided.

Illustratively, the radio communication terminal sends the information to the chip card which devices are connected to the radio communication terminal, for example in the form of a list specifying all devices coupled to the radio communication terminal. This allows the chip card to determine which devices can be used by the chip card or by an application running on the chip card. Consequently, the chip card or an application running on the chip card can make full use of all devices connected to the radio communication terminal.

Embodiments of the invention emerge from the dependent claims. The embodiments which are described in the context of the radio communication device are analogously valid for the method for controlling a chip card, the radio communication terminal, the chip card and the method for operating a chip card.

The chip card may comprise a storing unit adapted to store the device information. The device information may be stored according to a list structure, which may have a device type structure, as in an embodiment described below.

For example, the transmitting unit is configured to transmit the device information to the chip card when the radio communication terminal is switched on. The transmitting unit may also be configured to transmit the device information to the chip card when a device that has not been coupled to the radio communication terminal is coupled to the radio communication terminal or a device that has been coupled to the radio communication terminal is de-coupled from the radio communication terminal.

This means that the device information is transmitted to the chip card when the radio communication terminal is powered on and every time, that there is a change regarding the devices which are coupled to the radio communication terminal. Transferring the device information from the radio communication terminal to the chip card at terminal start up and when there is a change regarding the devices coupled to the radio communication terminal minimizes the traffic on the interface between the radio communication terminal and the chip card. Further, the device information as it is present in the chip card is always up to date and the chip card does not have to request the device information from the radio communication terminal when the chip card or an application running on the chip card wants to use a device.

The device information may further specify for at least one device that is coupled to the radio communication terminal parameters that are necessary to be known by the chip card or by an application running on the chip card for using the device.

The device information may also specify for at least one device that is coupled to the radio communication terminal a device priority that indicates a priority of the device based on which it is decided whether the device is used when at least a further device of the same type as the device is coupled to the radio communication terminal.

The radio communication terminal is for example a mobile phone. The radio communication device is for example a user equipment according to UMTS (Universal Mobile Telecommunications System) and the chip card is for example a UICC (Universal Integrated Circuit Card). The radio communication terminal may also be configured according to another radio communication standard like GSM (Global System for Mobile Communications) or CDMA2000 and the chip card may be a corresponding smart card, for example an SIM (Subscriber Identity module) card in case of GSM or an R-UIM in case of CDMA 2000.

The device information may be transmitted to the chip card using a CAT command, a SAT (SIM application toolkit) command, a USAT (USIM application toolkit; USIM: UMTS subscriber identity module) command, or a CCAT (CDMA application toolkit) command.

Illustrative embodiments of the invention are explained below with reference to the drawings.
- Figure 1: shows a mobile radio user device according to an embodiment of the invention.
- Figure 2: shows a flow diagram according to an embodiment of the invention.
- Figure 3: shows a message flow diagram according to an embodiment of the invention.
- Figure 4: shows a device list structure according to an embodiment of the invention.
- Figure 5: shows a device list structure according to an embodiment of the invention.
- Figure 6: shows a flow diagram according to an embodiment of the invention.
- Figure 7: shows a message flow diagram according to an embodiment of the invention.
- Figure 8: shows a message flow diagram according to an embodiment of the invention.

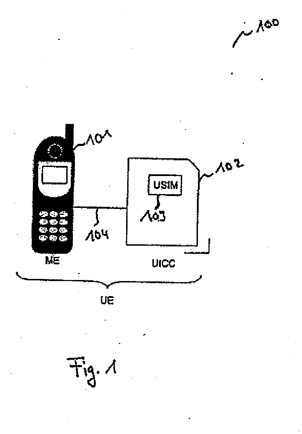

**Fig.1** shows a mobile radio user device 100 according to an embodiment of the invention.

The mobile radio user device 100 is a mobile radio user device according to the UMTS (Universal Mobile Telecommunications Service) standard, i.e., a so-called user equipment (UE). The mobile radio user device 100 consists of a mobile phone 101 (mobile equipment, ME) itself and further comprises a USIM (Universal Subscriber Identity Module) 103 which allows the usage of the mobile phone 101 in a UMTS mobile communication network. The USIM 103 represents a logical functionality and is implemented on a UICC (Universal Integrated Circuit Card) 102 which is a (physical) chip card (smart card).

By means of the USIM 103 data are stored which serve for the identification of the user of the mobile radio user device 100 when the mobile radio user device 100 is used in a mobile communication system and which are used to verify the authorisation of the user to use a mobile communication service. Further, data are stored on the USIM 103 which allow encryption and decryption of data sent and received by means of the mobile radio user device 100.

Applications can be run on the UICC 102. These applications may be defined by the operator of the mobile communication system that the mobile radio user device 100 is used with. The applications can make use of an interface 104 between the mobile equipment 101 and the UICC 102, which in case of UMTS is provided by the so-called USAT (USIM application toolkit). By using the interface 104, the applications running on the UICC 102 can make use of functionalities of the mobile equipment 101, e.g. send text messages (like an SMS (Short Message Service) message), displaying a graphical icon on the display of the mobile equipment 101 or playing a tone using the loudspeaker of the mobile equipment 101.

Further, external devices such as a headset, an external display (like a monitor), loudspeakers, printers, scanners or other hardware such as a MMC (Multimedia Card) can be connected to the mobile equipment 101, e.g. by using connection mechanisms like USB (Universal Serial Bus) or wireless connection mechanisms, such as Bluetooth.

In the following, it is explained how the UICC 102 is provided with information about the devices (by devices, also other hardware such as a MMC is meant in the following) connected to the mobile equipment 101.

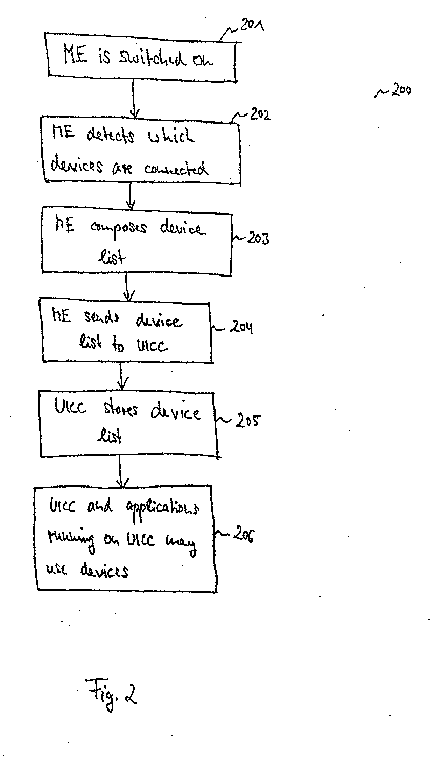

**Fig.2** shows a flow diagram 200 according to an embodiment of the invention.

In step 201, the mobile radio user device 100 is switched on by the user.

In step 202, the mobile equipment 101 detects which devices are connected to it.

In step 203, the mobile equipment 101 composes a device list, which contains an identification of all devices connected to the mobile equipment 101, parameter values or information related to the devices connected to the mobile equipment 101, which must be known by the UICC 102 or an application running on the UICC 102 in order to use the devices and priority information such that devices of the same type (e.g. all display devices or all printing devices) can be ordered according to their priorities.

In detail, the device list contains the following in this embodiment for each device connected to the mobile equipment 101:
- The device ID: The device ID indicates the device type of the device. A device type is e.g. monitor (or display), printer, keyboard, MMC, loudspeaker, headset, scanner etc. The device ID may be used to group all devices connected to the mobile equipment 101 according to their device types.
- The device name: The device name indicates a name of the device. The device names can e.g. be used to present all devices connected to the mobile equipment 101 to the user of the mobile radio user device 100
- The priority of the device: The priority of the device indicates a priority that can be used to determine which device has highest priority when multiple devices of one device type are connected to the mobile equipment 101. The priority of the device is e.g. a numerical value and by comparing the numerical values corresponding to devices connected to the mobile equipment 101 of the same device type, the device of this device type with the highest priority can be determined which is e.g. the preferred device of this type and is to be used when one device of the device type should be used.
- Device parameters: The device parameters specify information for the device that is necessary for the UICC 102 or an application running on the UICC 102 in order to use the device. This information may e.g. be:
   o A specification by which connection mechanism the device is connected to the mobile equipment 101, e.g. USB, W-LAN (Wireless local area network), Bluetooth, etc.
   o The version of the connection mechanisms, e.g. USB 2.0, etc.
   o Drivers or driver information for using the device
   o Specific information about the device, e.g. display resolution in case of a monitor or display device, type of a printer (colour or black/white) in case of a printing device, specification if a speaker is mono or stereo in case of a loudspeaker etc.

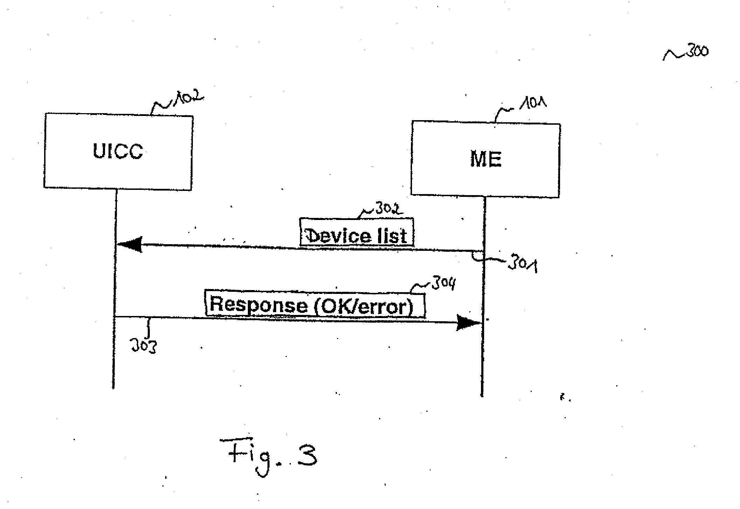

In step 204, the mobile equipment 101 transmits the device list to the UICC 102. This is illustrated in figure 3.

**Fig.3** shows a message flow diagram 300 according to an embodiment of the invention.

The message flow illustrated in figure 3 takes place between the UICC 102 and the mobile equipment 101.

In step 301, the mobile equipment 101 sends the device list in form of a device list message 302 to the UICC 102. This may e.g. be done by using a CAT (Card Application Toolkit) command "device list transfer" (or by a USAT command). The device list message 302 is in this embodiment sent to the UICC 102 in course of the UICC initialisation procedure.

In step 303, the UICC 102 responds to the device list message 302 by transmitting a response message 304 to the mobile equipment 101. Using the response message 304, the UICC 102 specifies whether it has received the devise list correctly. Accordingly, the response message 304 is an error message or an OK message.

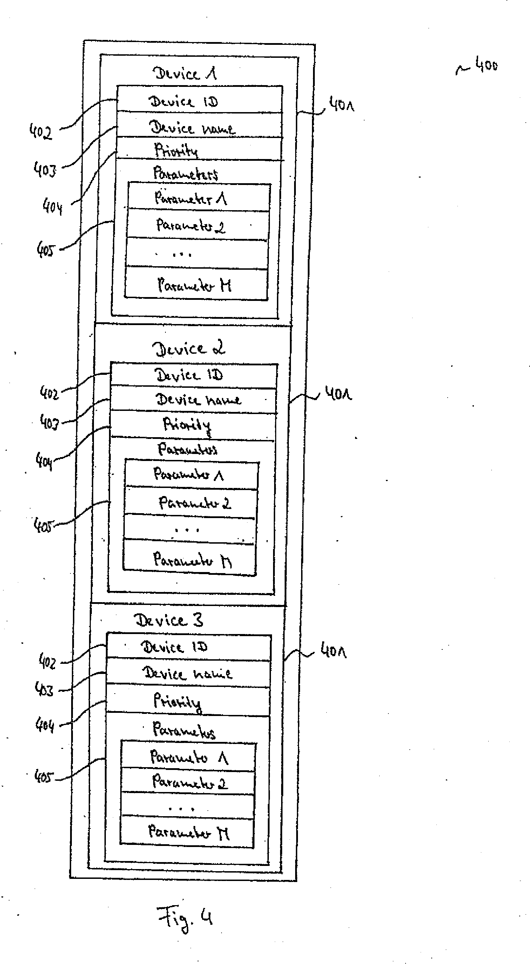

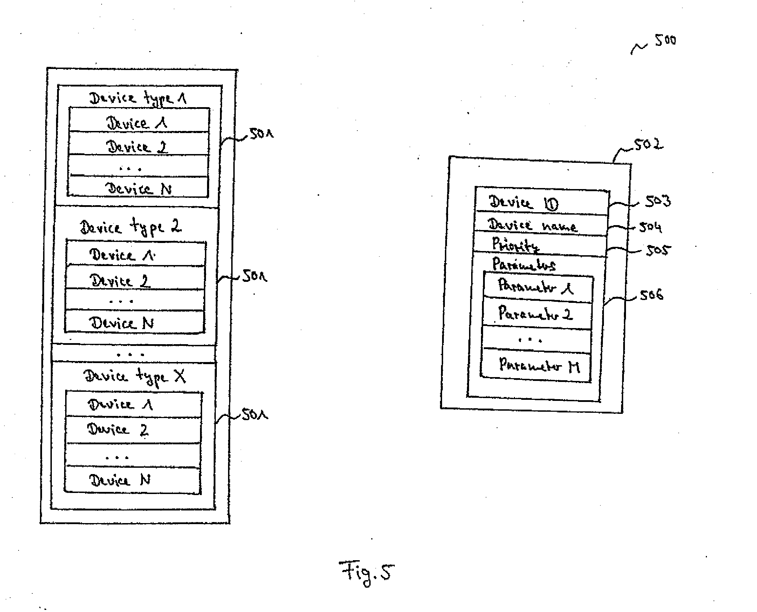

After reception of the device list, the device list is stored on the UICC 102 in step 205. In the following, two possible formats for storing the device list on the UICC 102 are explained with reference to figure 4 and figure 5.

**Fig.4** shows a device list structure 400 according to an embodiment of the invention.

The device list structure 400 may be used as a storage format by the UICC 102 for storing the device list. The device list structure 400 has no device type structure in contrast to the device list structure described below with reference to figure 5.

According to the device list structure 400, there exists a device block 401 for each device in the device list (in this example it is assumed that N devices are connected to the mobile equipment 101). In each device block 401, the device ID 402, the device name 403, the device priority 404, and device specific parameters 405 of the corresponding device are stored.

The device list structure 400 can be used to store all the device list information and is especially useful when only one device per device type is connected to the mobile equipment 101 (e.g. only one printer and only one monitor are connected). When only one device for a device type is connected to the mobile equipment 101 and information about this device is stored in the device list, it is not necessary to store priority information about the device.

**Fig.5** shows a device list structure 500 according to an embodiment of the invention.

The device list structure 500 can be used alternatively to the device list structure 400 shown in figure 4 to store the device list information on the UICC 102. According to the device list structure 500, the information about the device list connected to the mobile equipment 101 is stored per device type. This means that for each device type there exists a device type block 501 (it is assumed that devices of X different device types are connected to the mobile equipment 101). A device type block 501 contains a device block 502 for each device of the corresponding device type. As above, a device block 502 corresponding to a device contains the device ID 503, the device name 504, the device priority 505, and device specific parameters 506.

For example, two printers are connected to the mobile equipment 101 and one device type block 501 corresponds to the device type "printer". This device type block 501 contains a device block 502 for each of the two printers and each of these device blocks 502 contains the above-mentioned information about the respective printer.

In step 306, after the device list has been stored on the UICC, the UICC and applications running on the UICC may use the devices connected to the mobile equipment 101.

The UICC 102 or a software on the UICC 102 has the functionality to interpret the device list which is stored on the UICC 102. When the UICC 102 or an application running on the UICC 102 wants to use a specific device which can be connected to the mobile equipment 101, the UICC 102 (or the software running on the UICC providing this functionality) checks if the device to be used is listed in the device list. When the device is not listed in the device list, then the UICC 102 or the application running on the UICC 102 wanting to use the device get the information that the device is currently not connected to the mobile equipment 101. When the device to be used is in the device list, then the UICC 102 or the application running on the UICC get the information that the device is currently connected to the mobile equipment 101. In this case, the UICC 102 or the application running on the UICC 102 can easily use the device by using the information on the device stored in the device list, e.g. information on the connection mechanism by which the device is coupled to the mobile equipment 101.

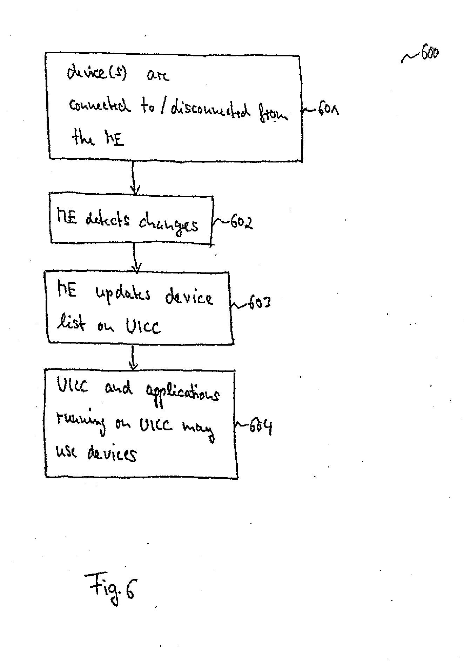

To avoid the case that the device list as stored on the UICC 102 contains information about a device that is no longer connected to the mobile equipment 101 or lacks the information about a device which was additionally coupled to the mobile equipment 101 after the transmission of the device list at UICC initialisation, the mobile equipment 101 updates the device list when there are changes regarding which devices (or which hardware) is connected to the mobile equipment 101. This is explained in the following with reference to figure 6.

**Fig.6** shows a flow diagram 600 according to an embodiment of the invention.

It is assumed that as explained above, a device list has been transmitted to the UICC 102 and has been stored thereon, for example in course of UICC initialisation.

In step 601, a device or multiple devices are connected to or disconnected from the mobile equipment 101. This means that the device list is no longer up to date. Depending on whether a device or has been additionally coupled to the mobile equipment 101 and or a device has been disconnected from the mobile equipment 101, there may be a device listed in the device list that is no longer coupled to the mobile equipment 101 or they may be a device coupled to the mobile equipment 101 that is not listed in the device list.

In step 602, the mobile equipment 101 detects the changes regarding which devices are connected to the mobile equipment 101.

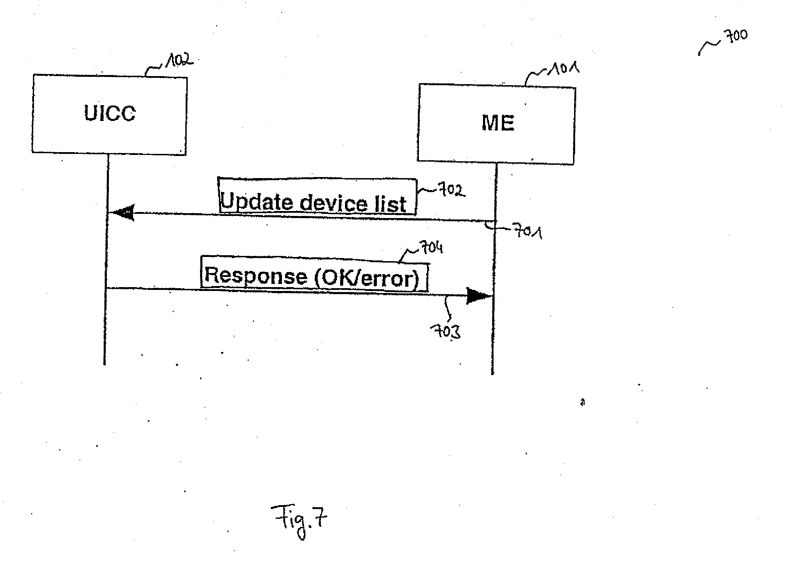

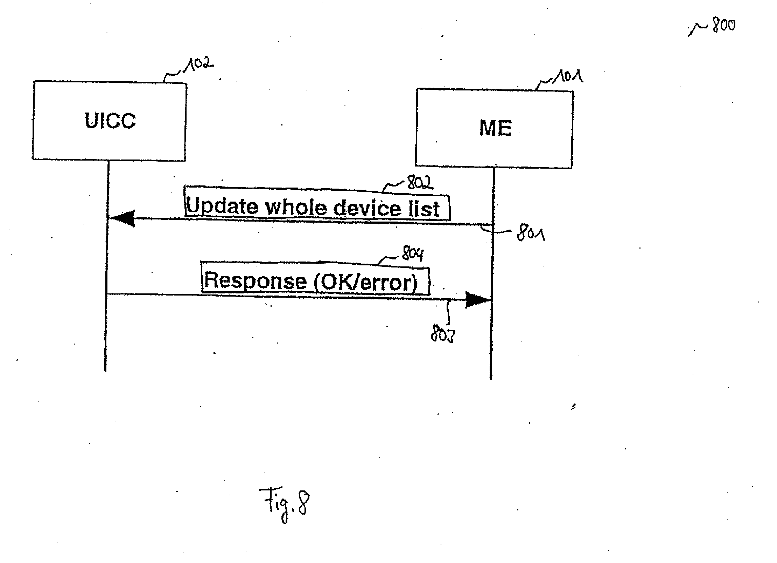

In step 603, the mobile equipment 101 updates the device list stored on the UICC 102. This can be done in two different ways which are explained with reference to figure 7 and figure 8 respectively.

**Fig.7** shows a message flow diagram 700 according to an embodiment of the invention.

The message flow takes place between the UICC 102 and the mobile equipment 101.

According to this method for updating the device list stored in the UICC 102, the device list is updated when the mobile equipment 101 has detected that a device has newly been connected to the mobile equipment 101 with only information about this new added device. Similarly, when a device is disconnected from the mobile equipment 101 and this has been detected by the mobile equipment 101 in step 602 the device list is updated by only deleting the information concerning the disconnected device from the device list.

When the mobile equipment 101 has detected that a device has been newly connected to the mobile equipment 101 or a device previously connected to the mobile equipment 101 has been disconnected from the mobile equipment 101, the mobile equipment sends, in step 701, an update device list message 702 to the UICC 102. The update device list message 702 may for example be transmitted to the UICC 102 according to a CAT command "Update device list". The update device list message 702 contains the following information:
- Update bit: This indicates if a device (i.e. the specification of a device and the information regarding the device) shall be deleted from the device list or added to the device list. When the update bit has the value 0, this means that a device from the device list shall be deleted; when the update bit has the value 1, this means that a device shall be added to the device list.
- Information for updating the device list: In case that a device was disconnected from the mobile equipment 101, the information which device should be deleted from the device list on the UICC 102 is contained. In case that a device has been connected to the mobile equipment 101 and should be added to the device list on the UICC 102, the specification of the device and further information for the device (device name, priority, etc., see above) are contained.

Instead of the update device list message 702, in another embodiment, two separate messages may be used wherein one message is used when a device has been disconnected from the mobile equipment 101 and the device list should be updated accordingly and the other message is used when a device has been newly connected to the mobile equipment 101 and the device list should be updated accordingly.

After the update device list message 702 has been received by the UICC 102, the device list stored on the UICC 102 (as described above for example stored according to the device list structures shown in figures 4 und 5) is updated according to the information contained in the update device list message 702.

The UICC 102 responds to the update device list message 702 in step 703 with a response message 704. When the update of the device list stored on the UICC 102 has gone wrong or when the update device list message 702 was not correctly received by the UICC 102 or in the case of another error, e.g. a device should be added to the device list and is already present in the device list or a device should be deleted from the device list and is not contained in the device list, the response message 704 is an error message. When no error has occurred and the device list stored on the UICC 102 has been updated correctly, the response message 704 is an OK message.

Alternatively, in case of changes regarding the devices connected to the mobile equipment 101, the whole device list (corrected according to the changes) is sent to the UICC 102 to replace the device list stored on the UICC. This is explained in the following with reference to figure 8.

**Fig.8** shows a message flow diagram 800 according to an embodiment of the invention.

The message flow takes place between the UICC 102 and the mobile equipment 101.

When a device has been disconnected from the mobile equipment 101 or a device is newly connected to the mobile equipment 101 and this has been detected by the mobile equipment 101 in step 602, the mobile equipment 101 sends an update whole device list message 802 in step 801 to the UICC 102. The update whole device list message 802 may for example be transmitted to the UICC 102 according to a CAT command "Update whole device list". The update whole device list message 802 contains the device list generated by the mobile equipment 101 as explained above with reference to figure 2 (cf. step 203). When the UICC 102 has received the update whole device list message 802, the device list stored on the UICC 102 is replaced by the device list contained in the update whole device list message 802.

In step 803, the UICC 102 responds to the update whole device list message 802 by transmitting a response message 804 to the mobile equipment 101. When the update of the device list on the UICC 102 has gone wrong or when the update whole device list message 802 has not been correctly received by the UICC 102, then the response message 804 is an error message. When the device list stored on the UICC 102 has been updated correctly (i.e. has been correctly replaced) the response message 804 is an OK message.

When the device list stored on the UICC 102 has been properly updated in step 603, the UICC 102 and applications running on the UICC 102 may use the devices connected to the mobile equipment 101 in step 604, similar to step 206 of the flow shown in figure 2.

### Reference signs

- 100: mobile radio user device
- 101: mobile phone
- 102: UICC
- 103: USIM
- 104: interface

- 200: flow diagram
- 201-206: processing steps

- 300: message flow diagram
- 301: processing step
- 302: device list message
- 303: processing step
- 304: response message

- 400: device list structure
- 401: device block
- 402: device ID
- 403: device name
- 404: device priority
- 405: device specific parameters

- 500: device list structure
- 501: device type block
- 502: device block
- 503: device ID
- 504: device name
- 505: device priority
- 506: device specific parameters

- 600: flow diagram
- 601-604: processing steps

- 700: message flow diagram
- 701: processing step
- 702: update device list message
- 703: processing step
- 704: response message

- 800: message flow diagram
- 801: processing step
- 802: update whole device list message
- 803: processing step
- 804: response message

## Claims

1. Radio communication device (101) comprising a radio communication terminal and a chip card (102) with a memory and a processor **characterised in that** the radio communication terminal comprises
- a generation unit configured to generate a device list (302) which specifies which devices are coupled to the radio communication terminal
- a transmitting unit configured to transmit the device list (302) to the chip card (102).

2. Radio communication device (101) according to claim 1, wherein the chip card (102) comprises a storing unit adapted to store the device list (302).

3. Radio communication device (101) according to claim 1 or 2, wherein the transmitting unit is configured to transmit the device list (302) to the chip card (102) when the radio communication terminal is switched on.

4. Radio communication device (101) according to any one of the claims 1 to 3, wherein the transmitting unit is configured to transmit the device list (302) to the chip card (102) when a device that has not been coupled to the radio communication terminal is coupled to the radio communication terminal or a device that has been coupled to the radio communication terminal is de-coupled from the radio communication terminal.

5. Radio communication device (101) according to any one of the claims 1 to 4, wherein the device information further specifies for at least one device that is coupled to the radio communication terminal parameters that are necessary to be known by the chip card or by an application running on the chip card (102) for using the device.

6. Radio communication device (101) according to any one of the claims 1 to 5, wherein the device information further specifies for at least one device that is coupled to the radio communication terminal a device priority that indicates a priority of the device based on which it is decided whether the device is used when at least a further device of the same type as the device is coupled to the radio communication terminal.

7. Radio communication device (101) according to any one of the claims 1 to 6, wherein the radio communication terminal is mobile phone (ME).

8. Radio communication device (101) according to any one of the claims 1 to 7, wherein the radio communication device is a user equipment according to UMTS and the chip card (102) is a UICC.

9. Radio communication device (101) according to any one of the claims 1 to 8, wherein the device information is transmitted to the chip card (102) using a CAT command, a SAT command, a USAT command, or a CCAT command.

10. Method for controlling a chip card of a radio communication device (101), wherein the radio communication device (101) comprises a radio communication terminal and the chip card (102) comprises a memory and a processor **characterised in that** the method comprises
- generating a device list (302) which specifies which devices are coupled to the radio communication terminal
- transmitting the device list (302) to the chip card (102).

11. Chip card (102) having a memory and a processor and which can be coupled to a radio communication terminal (101) **characterised in that** it comprises a receiving unit configured to receive a device list (302) which specifies which devices are coupled to the radio communication terminal from the radio communication terminal (101).

12. Method for operating a chip card (102) having a memory and a processor and which can be coupled to a radio communication terminal (101), **characterised in that** the method comprises receiving a device list (302) which specifies which devices are coupled to the radio communication terminal from the radio communication terminal (101).

## Patentansprüche

1. Funkkommunikationsvorrichtung (101), die ein Funkkommunikationsendgerät und eine Chipkarte (102) mit einem Speicher und einem Prozessor umfasst, **dadurch gekennzeichnet, dass** das Funkkommunikationsendgerät Folgendes umfasst:
- eine Erzeugungseinheit, die konfiguriert ist, eine Vorrichtungsliste (302) zu erzeugen, die spezifiziert, welche Vorrichtungen mit dem Funkkommunikationsendgerät gekoppelt sind;
- eine Sendeeinheit, die konfiguriert ist, die Vorrichtungsliste (302) zu der Chipkarte (102) zu senden.

2. Funkkommunikationsvorrichtung (101) nach Anspruch 1, wobei die Chipkarte (102) eine Speichereinheit umfasst, die dafür ausgelegt ist, die Vorrichtungsliste (302) zu speichern.

3. Funkkommunikationsvorrichtung (101) nach Anspruch 1 oder 2, wobei die Sendeeinheit konfiguriert ist, die Vorrichtungsliste (302) zu der Chipkarte (102) zu senden, wenn das Funkkommunikationsendgerät eingeschaltet wird.

4. Funkkommunikationsvorrichtung (101) nach einem der Ansprüche 1 bis 3, wobei die Sendeeinheit konfiguriert ist, die Vorrichtungsliste (302) zu der Chipkarte (102) zu senden, wenn eine Vorrichtung, die nicht mit dem Funkkommunikationsendgerät gekoppelt ist, mit dem Funkkommunikationsendgerät gekoppelt wird oder wenn eine Vorrichtung, die mit dem Funkkommunikationsendgerät gekoppelt worden ist, von dem Funkkommunikationsendgerät abgekoppelt wird.

5. Funkkommunikationsvorrichtung (101) nach einem der Ansprüche 1 bis 4, wobei die Vorrichtungsinformationen ferner für wenigstens eine Vorrichtung, die mit dem Funkkommunikationsendgerät gekoppelt ist, Parameter spezifizieren, die die Chipkarte oder eine Anwendung, die auf der Chipkarte (102) läuft, unbedingt kennen muss, um die Vorrichtung zu verwenden.

6. Funkkommunikationsvorrichtung (101) nach einem der Ansprüche 1 bis 5, wobei die Vorrichtungsinformationen ferner für wenigstens eine Vorrichtung, die mit dem Funkkommunikationsendgerät gekoppelt ist, eine Vorrichtungspriorität spezifizieren, die eine Priorität der Vorrichtung angibt, anhand derer entschieden wird, ob die Vorrichtung verwendet wird, wenn wenigstens eine weitere Vorrichtung desselben Typs wie die Vorrichtung mit dem Funkkommunikationsendgerät gekoppelt wird.

7. Funkkommunikationsvorrichtung (101) nach einem der Ansprüche 1 bis 6, wobei das Funkkommunikationsendgerät ein Mobiltelefon (ME) ist.

8. Funkkommunikationsvorrichtung (101) nach einem der Ansprüche 1 bis 7, wobei die Funkkommunikationsvorrichtung ein Anwendergerät gemäß UMTS ist und die Chipkarte (102) eine UICC ist.

9. Funkkommunikationsvorrichtung (101) nach einem der Ansprüche 1 bis 8, wobei die Vorrichtungsinformationen zu der Chipkarte (102) unter Verwendung eines CAT-Befehls, eines SAT-Befehls, eines USAT-Befehls oder eines CCAT-Befehls gesendet werden.

10. Verfahren zum Steuern einer Chipkarte einer Funkkommunikationsvorrichtung (101), wobei die Funkkommunikationsvorrichtung (101) ein Funkkommunikationsendgerät umfasst und die Chipkarte (102) einen Speicher und einen Prozessor umfasst, **dadurch gekennzeichnet, dass** das Verfahren Folgendes umfasst:
- Erzeugen einer Vorrichtungsliste (302), die spezifiziert, welche Vorrichtungen mit dem Funkkommunikationsendgerät gekoppelt sind,
- Senden der Vorrichtungsliste (302) zu der Chipkarte (102).

11. Chipkarte (102), die einen Speicher und einen Prozessor besitzt und die mit einem Funkkommunikationsendgerät (101) gekoppelt werden kann, **dadurch gekennzeichnet, dass** sie eine Empfangseinheit umfasst, die konfiguriert ist, von dem Funkkommunikationsendgerät (101) eine Vorrichtungsliste (302) zu empfangen, die spezifiziert, welche Vorrichtungen mit dem Funkkommunikationsendgerät gekoppelt sind.

12. Verfahren zum Betreiben einer Chipkarte (102), die einen Speicher und einen Prozessor besitzt und die mit einem Funkkommunikationsendgerät (101) gekoppelt werden kann, **dadurch gekennzeichnet, dass** das Verfahren das Empfangen einer Vorrichtungsliste (302), die spezifiziert, welche Vorrichtungen mit dem Funkkommunikationsendgerät gekoppelt sind, von dem Funkkommunikationsendgerät (101) umfasst.

## Revendications

1. Dispositif de radiocommunication (101) comprenant un terminal de radiocommunication et une carte à puce (102) à mémoire et processeur, **caractérisé en ce que** le terminal de radiocommunication comprend
- une unité de génération configurée pour générer une liste de dispositifs (302) qui spécifie les dispositifs qui sont couplés au terminal de radiocommunication
- une unité de transmission configurée pour transmettre la liste de dispositifs (302) à la carte à puce (102).

2. Dispositif de radiocommunication (101) selon la revendication 1, dans lequel la carte à puce (102) comprend une unité de stockage adaptée pour stocker la liste de dispositifs (302).

3. Dispositif de radiocommunication (101) selon la revendication 1 ou 2, dans lequel l'unité de transmission est configurée pour transmettre la liste de dispositifs (302) à la carte à puce (102) quand le terminal de radiocommunication est allumé.

4. Dispositif de radiocommunication (101) selon l'une quelconque des revendications 1 à 3, dans lequel l'unité de transmission est configurée pour transmettre la liste de dispositifs (302) à la carte à puce (102) quand un dispositif qui n'a pas été couplé au terminal de radiocommunication est couplé au terminal de radiocommunication ou un dispositif qui a été couplé au terminal de radiocommunication est découplé du terminal de radiocommunication.

5. Dispositif de radiocommunication (101) selon l'une quelconque des revendications 1 à 4, dans lequel les informations de dispositif spécifient en outre pour au moins un dispositif qui est couplé au terminal de radiocommunication des paramètres qui doivent être connus par la carte à puce ou par une application exécutée sur la carte à puce (102) pour utiliser le dispositif.

6. Dispositif de radiocommunication (101) selon l'une quelconque des revendications 1 à 5, dans lequel les informations de dispositif spécifient en outre pour au moins un dispositif qui est couplé au terminal de radiocommunication une priorité de dispositif qui indique une priorité du dispositif en fonction de laquelle il est décidé que le dispositif est utilisé ou non quand au moins un autre dispositif du même type que le dispositif est couplé au terminal de radiocommunication.

7. Dispositif de radiocommunication (101) selon l'une quelconque des revendications 1 à 6, dans lequel le terminal de radiocommunication est un téléphone mobile (ME).

8. Dispositif de radiocommunication (101) selon l'une quelconque des revendications 1 à 7, dans lequel le dispositif de radiocommunication est un équipement utilisateur selon UMTS et la carte à puce (102) est une carte UICC.

9. Dispositif de radiocommunication (101) selon l'une quelconque des revendications 1 à 8, dans lequel les informations de dispositif sont transmises à la carte à puce (102) en utilisant une commande CAT, une commande SAT, une commande USAT ou une commande CCAT.

10. Procédé de commande d'une carte à puce d'un dispositif de radiocommunication (101), dans lequel le dispositif de radiocommunication (101) comprend un terminal de radiocommunication et la carte à puce (102) comprend une mémoire et un processeur, **caractérisé en ce que** le procédé comprend :
- la génération d'une liste de dispositifs (302) qui spécifie les dispositifs qui sont couplés au terminal de radiocommunication
- la transmission de la liste de dispositifs (302) à la carte à puce (102).

11. Carte à puce (102) ayant une mémoire et un processeur et qui peut être couplée à un terminal de radiocommunication (101) **caractérisée en ce qu'**elle comprend une unité de réception configurée pour recevoir depuis le terminal de radiocommunication (101) une liste de dispositifs (302) qui spécifie les dispositifs qui sont couplés au terminal de radiocommunication.

12. Procédé d'exploitation d'une carte à puce (102) ayant une mémoire et un processeur et qui peut être couplée à un terminal de radiocommunication (101), **caractérisé en ce que** le procédé comprend la réception depuis le terminal de radiocommunication (101 d'une liste de dispositifs (302) qui spécifie les dispositifs qui sont couplés au terminal de radiocommunication (101).
